# EUROPEAN PATENT SPECIFICATION

(11) **EP 1 641 669 B1**
(45) Date of publication and mention of the grant of the patent: **21.05.2008**
(21) Application number: 04749112.1
(22) Date of filing: 02.07.2004
(51) Int. Cl.: B62D 33/077

(54) **SYSTEM FOR CONNECTING UNITS TO A TRUCK AND A DEVICE FORMING PART OF THE SYSTEM**
SYSTEM ZUR VERBINDUNG VON EINHEITEN MIT EINEM LASTWAGEN UND EINEN TEIL DES SYSTEMS BILDENDE VORRICHTUNG
SYSTEME DE FIXATION DE SUPERSTRUCTURES A UN VEHICULE DE TRANSPORT DE MARCHANDISES ET DISPOSITIF COMPRIS DANS LEDIT SYSTEME

(30) Priority: 08.07.2003 SE 0302013
(43) Date of publication of application: 05.04.2006
(73) Proprietor: VOLVO LASTVAGNAR AB, 405 08 Göteborg (SE)
(72) Inventor: REGNELL, Hans, S-442 50 Ytterby (SE); LILJEBLAD, Benny, S-443 38 Lerum (SE); GUSTAFSSON, Jens, S-416 69 Göteborg (SE)
(74) Representative: Mossmark, Anders Lennart
(86) International application number: PCT/SE2004/001076
(87) International publication number: WO 2005/002951

(56) References cited:
- DE-C1- 19 636 026
- DE-U1- 29 800 368
- FR-A1- 2 811 955

## Description

### TECHNICAL FIELD

The present invention relates to a system according to the preamble of the following claim 1.

The present invention also relates to a device according of the preamble to the following claim 2.

### BACKGROUND ART

The upper flange of the longitudinal frame members in the chassis of a goods vehicle has been used for attaching superstructures. This means that the upper flange must be unimpeded and designed for such attachment and cannot be used for attaching other equipment that is associated with the goods vehicle. In addition, both the fixing devices on the frame members and on the superstructure must be designed specially to fit each other in each individual case, which imposes requirements relating to the planning of components in both the chassis and the superstructure, both during the development of new goods vehicles and during the development of new superstructures. For superstructures, this often involves welding which results in worse protection against corrosion and poor versatility. Document DE-C-196 36 026, according to the preamble features of claims 1 and 3, discloses a vehicle frame having auxiliary profiles to strenghten the vehicle frame so as to be able to carry a crane.

### DISCLOSURE OF INVENTION

The object of the present invention is to produce a system and an arrangement that enables there to be greater freedom and versatility in the design and production of both goods vehicles and superstructures for these.

Another object is to enable there to be an optimizing of the durability of the frame of the vehicle in relation to weight and cost, independent of the attachment points on the superstructure.

The said objects are achieved by means of the system and the device according to the present invention, the characteristics of which are described in the following claims 1 and 2 respectively.

### BRIEF DESCRIPTION OF DRAWINGS

The invention will be described in greater detail in the following in the form of several embodiments, with reference to the attached drawings, in which
Figure 1 shows a partial perspective view of a first example of a device comprised in the system according to the invention for attaching a superstructure to a goods vehicle,
Figure 2, shows schematically and directly from the back the attachment device according to Figure 1 for attaching a superstructure to a goods vehicle,
Figure 3 shows a second example of a device according to the invention in a view corresponding to Figure 1, while
Figures 4-9 show various variants of attachment devices to the invention.

### MODE(S) FOR CARRYING OUT THE INVENTION

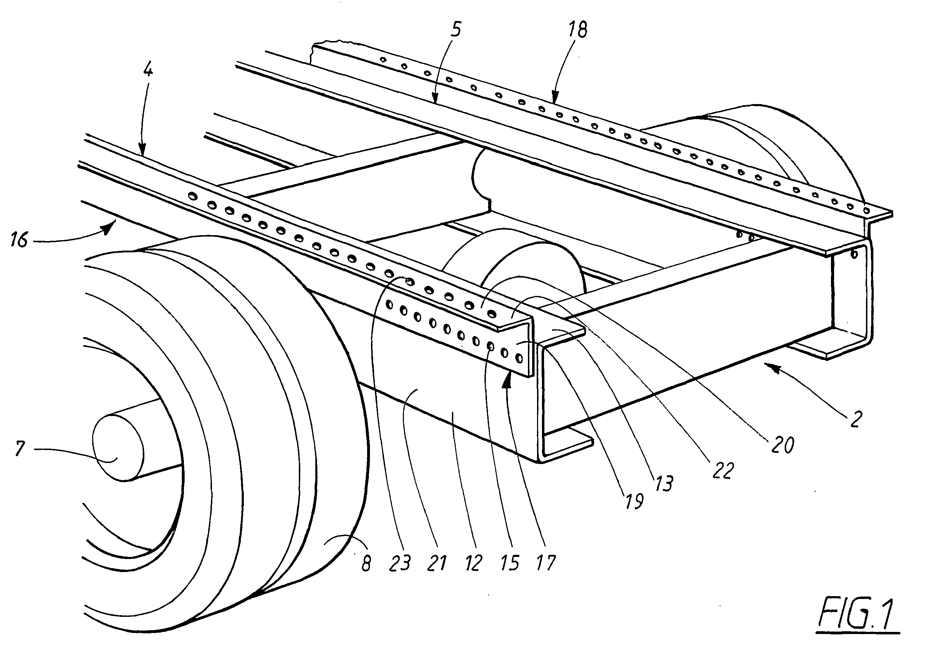

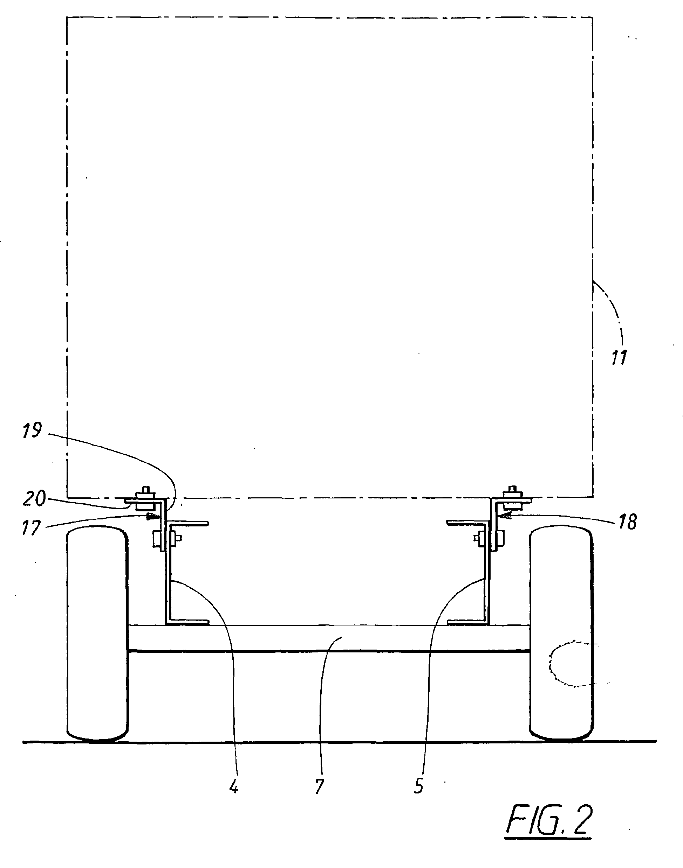

Firstly, the attachment system and the device according to the invention will be described as a whole and in the form of a first embodiment with reference to Figures 1 and 2. The parts of a goods vehicle that are of importance in this connection are also shown here, which parts have been developed and produced in their basic design by a goods vehicle manufacturer. The goods vehicle consists essentially of a chassis 1, that consists in turn of a vehicle frame 2 and the least two wheel undercarriages 3 that support the vehicle frame. Figures 1 and 2 show the rear wheel undercarriage 3, while a front wheel undercarriage (not shown) supports the front part of the vehicle frame, which also supports a vehicle cab (not shown). The vehicle frame 2 has a number of longitudinal main beams 4, 5, in this example two in number, which extend essentially in a horizontal direction and essentially parallel to each other and are joined together by means of a number of transverse frame members 6. The wheel undercarriage has a wheel suspension (not shown), which supports the vehicle frame in such a way that it is sprung and can move relative to the wheel axle 7 upon which the vehicle's wheels 8, 9 rotate. The front wheel undercarriage, which is not shown, similarly supports the vehicle frame in such a way that it can move via a wheel suspension, with the wheels in the front undercarriage being steerable from the driver's seat in the cab of the vehicle. In special embodiments, the wheels in the rear wheel undercarriage can also be steerable. The wheels in the rear wheel undercarriage are driven by means of a driving motor (not shown) via a driveline (not shown).

The vehicle manufacturer thus produces the basic design described above, to which, however, there must be additions in order for the goods vehicle to achieve its final design, which can vary to a great extent depending upon the intended use of the goods vehicle concerned and the work it is to carry out. For this purpose, different types of superstructure are produced in the form of containers, or various types of devices, such as lifting devices, etc. These are usually produced by separate superstructure manufacturers who manufacture platform bodies, closed containers for general cargo or bulk loads, tanks for liquid loads, refuse collection vehicles with lifting devices, tipping devices, etc. In Figures 1 and 2, a superstructure in form of a box-shaped container 11 is shown schematically by chain-dotted lines.

In the example shown, the longitudinal frame members 4, 5 consist of channel sections, which are open inwards towards each other and have a vertical web 12, which forms a vertical beam part which, in cross-section, extends in a vertical direction, with an upper flange and a lower flange 13, 14 which, in cross-section, form beam parts extending in a horizontal direction. In addition to forming the frame of the goods vehicle, the longitudinal beams and their parts are used to support and attach various pieces of equipment which are comprised in the goods vehicle, such as hydraulics and pneumatics, fuel tank and associated pipes and hoses for the various systems. In addition, at the front the two frame members support the cab of the vehicle and the driving motor. In a standard version, the frame members are usually provided with a number of holes that have a predetermined standard layout, for example in one or several rows, that can be used as required. For example, a longitudinal row of holes 15 can be arranged in the beam part 12.

According to the invention, the longitudinal frame members 4, 5 in the frame 2 of the vehicle support an attaching device 16 comprised in the attachment system in form of a longitudinal section 17, 18 that is permanently attached to each main beam. In the example shown, each section consists of an angle section with a section part 19 extending essentially in a vertical direction and in the form of a fixing component permanently attached to the part 12 of the main beam that extends in a vertical direction, and an attachment part 20 extending in a sideways direction, in the example essentially horizontally, that is intended to support and be attached to an attachment surface comprised in the attachment system on the superstructure 11 concerned. The attachment to the main beam is carried out by means of fixing elements, for example screw connections, rivet connections, fitted bolts or the like, via a plurality of holes in the fixing part 12, which can be arranged, that is positioned and dimensioned, to interact with holes 15 in the rows of holes in the part 12 of the main beams 4, 5. More specifically, the fixing part 19 of the attachment section 17, 18 has a flat contact surface which is intended to make contact with the flat side surfaces 21 of the main beam extending in a sideways direction, in an outwards direction in the example shown. The part of the attachment section that extends in a sideways direction, that is the attachment part 20, has a suitably flat supporting surface 22 that faces upwards, provided with at least one row of holes 23 over the whole of its length in order to make possible a versatile attachment to selected predetermined holes or fixing elements in the attachment surface of the superstructure, such as bolts with nuts or studs, in order to carry out the attachment or fixing of the superstructure concerned. The attachment between the superstructure and the attachment section 17, 18 can be carried out using other means, such as clamp connections. The attachment section 16 can extend over most of the length of the main beams 4, 5 in the form of a single unbroken length, or alternatively of several lengths with or without gaps, or alternatively of one or several shorter lengths.

In Figures 1 and 2, it can be seen that, in the example shown, the attachment section projects upwards from the uppermost part 13 of the main beam and, as a result, this surface is completely unimpeded and an angled, protected space is created, for example for laying cables or hoses, and placing other components, etc. In addition, increased clearance, that is a larger space between the wheels and the superstructure, is obtained.

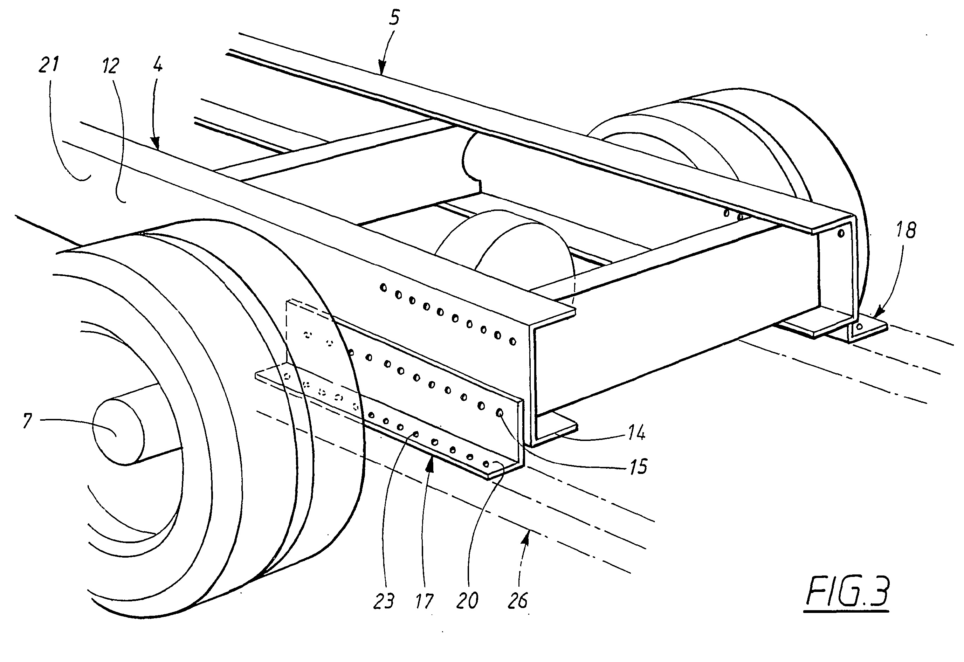

The example according to Figure 3 shows an alternative or supplementary position of the attaching device 16 in the attachment system according to the invention. In this example, sections 17, 18 of the same shape can be used, even though the length of the sections in the example is considerably shorter and extends essentially along the part of the beams 4, 5 that extends behind the rear wheel axle 7. In addition, the sections 17, 18 are reversed and attached to the lower edge of the main beams. The flange of the sections that extends in a sideways direction forms the attachment part 20 with an attachment surface for a part of a superstructure 26 that is arranged pointing backwards or at the back, which is indicated in the form of a fixing beam 26 which, in the example, is arranged on the underside of the flange 20 of the section that extends in a sideways direction, but can alternatively be located on its upper side. In both cases, the superstructure has attachment holes or fixing elements that are selected in advance, with a layout such that they fit in a number of holes selected from the existing holes 23 in the rows of holes in the flange, that is in the attachment part 20. In the case in question, the section projects downwards below the lower flange 14 of the main beam, but it can alternatively be on a level with this. As another alternative, the flange 20 can be at a higher level than the lower edge of the main beam. In the embodiment according to Figure 3, the attachment sections 17, 18 with their vertical fixing parts 19 are in contact with and are attached to the outside 21 of the beam part 12 as a result of the attachment sections having similarly a row of holes 15 for fixing elements, which similarly fit in corresponding holes in the lower parts of the main beam 4, 5. The attachment sections 17, 18 according to Figure 3 can also extend in front of the wheel axles for special equipment.

By means of the embodiment according to Figure 3, a superstructure can be attached at the back of a vehicle either separately or together with a superstructure that is supported by the frame members. Thus, on one and the same goods vehicle, sections can be arranged both above and below the main beams for attaching several superstructures. Examples of superstructures at the back can be lifting devices such as lifting platforms, cranes, lifting devices for rubbish bins on refuse collection vehicles, including those where a container constitutes a superstructure on the vehicle.

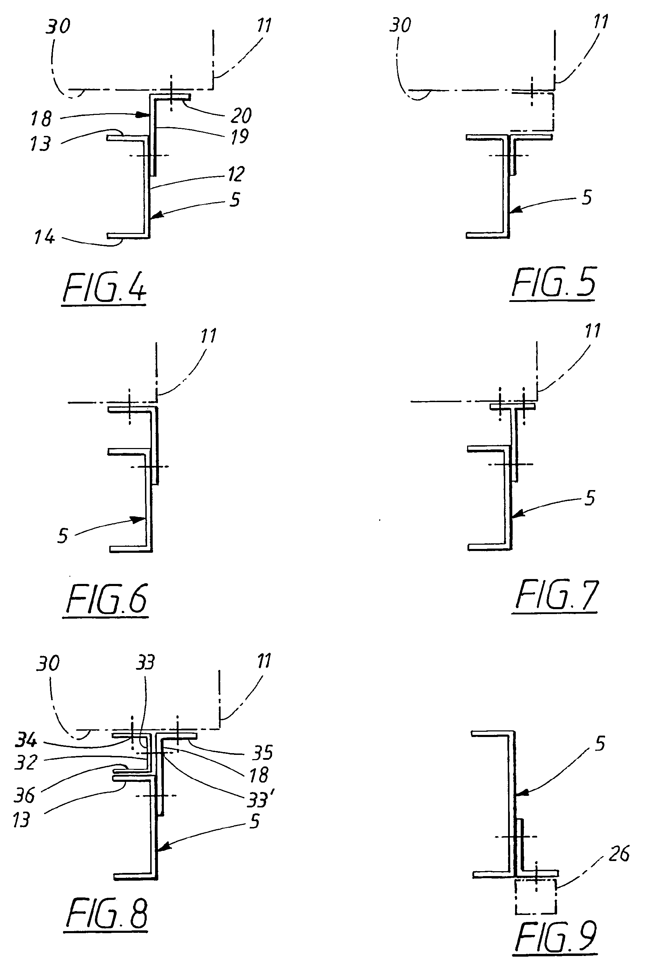

Figures 4-8 show schematically examples of different positions and designs of the attachment section, with Figure 4 showing the embodiment described above in Figures 1 and 2. The attachment surface 30 or attaching device of the superstructure 11 constitutes a part of the attachment system according to the invention and can be a partial surface of the superstructure itself as indicated for instance in Figure 4, but can advantageously be a downwards facing surface of a flange 31 of a section, for example a channel section, permanently attached to the underside of the superstructure, as shown in the example according to Figure 5. Two parallel attaching devices, such as sections, are here arranged on the superstructure 11 and have the same relative positions as the attaching devices on the goods vehicle, namely the sections 17, 18 and their holes 23. Figure 5 shows an attachment section in the form of an angle section, but with the attachment surface on a level with the upper flange 13 of the main beam, and Figure 6 shows an attachment section, still in the shape of an angle section, but turned so that the attachment flange 20 is facing in the same direction as the upper and lower flanges 13, 14 of the main beam, that is facing inwards, whereby a particularly protected space 28 is created for laying cables and placing components, etc.

Figure 7 shows an alternative embodiment in which the angle section is replaced by a T-section, which transfers the vertical load from the superstructure to the main beam in a more symmetrical way.

Figure 8 shows an embodiment in which the angle section according to Figure 4 is supplemented by an inward-facing horizontal channel section 32. The web 33 is attached to the vertical part of the angle section by means of a fixing element 33', while the upper flange 34 of the channel section forms a supplementary contact surface, which is located at the same level as the contact surface 35 of the angle section. The lower flange 36 is advantageously in contact with the upper flange 13 of the main beam 5, whereby the load from the superstructure 11 is transferred to the main beam via both sections. The channel section 32 can either be a part of the goods vehicle, that is a part of the attaching devices belonging to the chassis frame, or can be a part of the superstructure.

Figure 9 shows an alternative embodiment with low positioning of the attachment section, which is shown in greater detail in Figure 3. In the embodiment according to Figure 9, however, the angle section is positioned with its lower edge on a level with the flange 14 of the main beam 5.

It is thus common to all the embodiments that are shown and that are possible that a attachment system is created according to the invention in the form of an "interface" that provides a uniform predetermined design of both the goods vehicle chassis, without affecting the other constructional parts of the chassis, and of all the various superstructures, making possible a combined construction according to an agreed standard, so that superstructure manufacturers will only require instructions for each chassis version concerning the location of the attachment section on the goods vehicle, that is layout and spacing of the rows of holes and the distance between the rows of holes, that is between the parallel attachment sections. By means of this system, the goods vehicle can, in addition, be modified in a simple way or can be changed temporarily to another use, for example from a platform to a closed container or can have the addition of lifting devices, without requiring special modifications to the main beams, with the associated risk of reduced chassis strength and interference with other installations.

## Claims

1. An interface system for attaching various superstructures to a goods vehicle, the vehicle being provided with a chassis frame comprising longitudinal main beams (4, 5), each provided with at least one beam part (12) extending in a vertical direction with side surfaces (21), wherein the system comprises attaching devices (17, 18) associated with the chassis frame, arranged on each main beam, and also attaching devices (30) belonging to the superstructure (11), with the attaching device of the chassis frame consisting of at least one longitudinal attachment section (17, 18) attached to each main beam (4, 5) by means of fixing elements, the attachment sections having a longitudinal vertical fixing part (19), by means of which the attachment section is permanently attached to one side surface (21) of the respective main beam, **characterized in that** the attachment section (17, 18) has a longitudinal horizontal attachment part (20) with an attachment surface (22) that faces upwards or downwards, which attachment surface is provided with at least one row of attachment means, with selected means being used for each type of superstructure for attaching the superstructure to the goods vehicle, with the attachment sections and their attachment means having positions that are specially selected for the system and with the attaching device (30) of the superstructure having corresponding positions that are specially selected for the system.

2. An interface device for attaching various superstructures to a goods vehicle, the vehicle being provided with a chassis frame comprising two longitudinal main beams (4, 5), each provided with at least one beam part (12) extending in a vertical direction with side surfaces (21), wherein the device comprises a longitudinal attachment section (17, 18) permanently attachable to each main beam (4, 5) by means of fixing elements, the attachment sections having a longitudinal vertical fixing part (19) by means of which the attachment section is permanently attachable to one side surface (21) of the respective main beam, and attaching devices (30) associated with the superstructure (11) are arranged to be attached to the attachment section (17, 18) of the main beams (4, 5), **characterized in that** the attachment section (17, 18) has a longitudinal horizontal attachment part (20) with an attachment surface (22) that faces upwards or downwards, which attachment surface is provided with at least one row of attachment means, with selected means being used for each type of superstructure for attaching the superstructure to the goods vehicle.

3. The device as claimed in claim 2, **characterized in that** the attachment sections (17, 18) are at least two in number and are arranged at a selected distance apart and **in that** the attachment means being holes (15) are arranged with a predetermined uniform layout.

4. The device as claimed in claim 3, **characterized in that** the attachment sections (17, 18) consist of angle sections, T-sections, channel sections or Z-sections, or a combination of these.

5. The device as claimed in claim 4, **characterized in that** the attachment part (20) of the sections (17, 18) is located with its attachment surface (22) in a vertical position at a distance from the associated main beam.

6. The device as claimed in claim 2, **characterized in that** the attachment sections (17, 18) are attached to the upper edge of the main beams (4, 5).

7. The device as claimed in claim 2, **characterized in that** the attachment sections (17, 18) are attached to the lower edge of the main beams (4, 5).

8. The device as claimed in claim 2, **characterized in that** the attachment sections (17, 18) are attached to the outside of the main beams (4, 5).

## Patentansprüche

1. Schnittstellensystem zum Anbringen verschiedener Aufbauten an einem Güterfahrzeug, wobei das Fahrzeug mit einem Chassisrahmen versehen ist, der Längshauptträger (4, 5) aufweist, die jeweils mit mindestens einem Trägerteil (12) versehen sind, der sich in einer vertikalen Richtung mit Seitenflächen (21) erstreckt, wobei das System mit dem Chassisrahmen verknüpfte Anbringvorrichtungen (17, 18), die an dem jeweiligen Hauptträger angeordnet sind, und ebenso zu dem Aufbau (11) gehörige Anbringvorrichtungen (30) aufweist, wobei die Anbringvorrichtung des Chassisrahmens aus mindestens einem Längsanbringabschnitt (17, 18) besteht, der an den jeweiligen Hauptträger (4, 5) mittels Befestigungselementen angebracht ist, wobei die Anbringabschnitte einen longitudinalen Vertikalbefestigungsteil (19) besitzen, mittels dessen der Anbringabschnitt dauerhaft an einer Seitenfläche (21) des jeweiligen Hauptträgers angebracht ist, **dadurch gekennzeichnet, dass** der Anbringabschnitt (17, 18) einen longitudinalen Horizontalanbringteil (20) mit einer Anbringfläche (22) besitzt, die nach oben oder nach unten gerichtet ist, welche Anbringfläche mit mindestens einer Reihe von Anbringmitteln versehen ist, wobei ausgewählte Mittel für die jeweilige Art des Aufbaus zum Anbringen des Aufbaus an dem Güterfahrzeug verwendet werden, wobei die Anbringabschnitte und ihre Anbringmittel Positionen besitzen, die speziell für das System ausgewählt sind, und wobei die Anbringvorrichtung (30) des Aufbaus entsprechende Positionen besitzt, die speziell für das System ausgewählt sind.

2. Schnittstellenvorrichtung zum Anbringen verschiedener Aufbauten an einem Güterfahrzeug, wobei das Fahrzeug mit einem Chassisrahmen versehen ist, der zwei Längshauptträger (4, 5) aufweist, die jeweils mit mindestens einem Trägerteil (12) versehen sind, der sich in einer vertikalen Richtung mit Seitenflächen (21) erstreckt, wobei die Vorrichtung einen Längsanbringabschnitt (17, 18) aufweist, der dauerhaft an dem jeweiligen Hauptträger (4, 5) mittels Befestigungselementen anbringbar ist, wobei die Anbringabschnitte einen longitudinalen Vertikalbefestigungsteil (19) besitzen, mittels dessen der Anbringabschnitt dauerhaft an einer Seitenfläche (21) des jeweiligen Hauptträgers anbringbar ist, und mit dem Aufbau (11) verknüpfte Anbringvorrichtungen (30) sind angeordnet, um an dem Anbringabschnitt (17, 18) der Hauptträger (4, 5) angebracht zu werden, **dadurch gekennzeichnet, dass** der Anbringabschnitt (17, 18) einen longitudinalen Horizontalanbringteil (20) mit einer Anbringfläche (22) besitzt, die nach oben oder nach unten gerichtet ist, welche Anbringfläche mit mindestens einer Reihe von Anbringmitteln versehen ist, wobei ausgewählte Mittel für die jeweilige Art des Aufbaus zum Anbringen des Aufbaus an dem Güterfahrzeug verwendet werden.

3. Vorrichtung nach Anspruch 2, **dadurch gekennzeichnet, dass** die Anbringabschnitte (17, 18) zumindest zwei an der Zahl sind und in einem ausgewählten Abstand voneinander angeordnet sind, und dass die Anbringmittel die Löcher (15) sind, mit einem vorbestimmten gleichmäßigen Layout angeordnet sind.

4. Vorrichtung nach Anspruch 3, **dadurch gekennzeichnet, dass** die Anbringabschnitte (17, 18) aus Winkelabschnitten, T-Abschnitten, Kanalabschnitten oder Z-Abschnitten oder einer Kombination derselben bestehen.

5. Vorrichtung nach Anspruch 4, **dadurch gekennzeichnet, dass** der Anbringteil (20) der Abschnitte (17, 18) mit seiner Anbringfläche (22) an einer vertikalen Position in einem Abstand von dem zugehörigen Hauptträger gelegen ist.

6. Vorrichtung nach Anspruch 2, **dadurch gekennzeichnet, dass** die Anbringabschnitte (17, 18) an dem oberen Rand der Hauptträger (4, 5) angebracht sind.

7. Vorrichtung nach Anspruch 2, **dadurch gekennzeichnet, dass** die Anbringabschnitte (17, 18) an dem unteren Rand der Hauptträger (4, 5) angebracht sind.

8. Vorrichtung nach Anspruch 2, **dadurch gekennzeichnet, dass** die Anbringabschnitte (17, 18) auf der Außenseite der Hauptträger (4, 5) angebracht sind.

## Revendications

1. Système d'interface pour fixer diverses superstructures sur un véhicule de marchandises, le véhicule étant muni d'un cadre de châssis comportant des poutres principales longitudinales (4, 5), chacune étant munie d'au moins une partie de poutre (12) s'étendant dans une direction verticale ayant des surfaces latérales (21), dans lequel le système comporte des dispositifs de fixation (17, 18) associés au cadre de châssis, agencés sur chaque poutre principale, et aussi des dispositifs de fixation (30) appartenant à la superstructure (11), le dispositif de fixation du cadre de châssis étant constitué d'au moins un tronçon de fixation longitudinal (17, 18) fixé sur chaque poutre principale (4, 5) par l'intermédiaire d'éléments de fixation, les tronçons de fixation ayant une partie de fixation verticale longitudinale (19), par l'intermédiaire de laquelle le tronçon de fixation est relié de manière permanente à une surface latérale (21) de la poutre principale respective, **caractérisé en ce que** le tronçon de fixation (17, 18) a une partie de fixation horizontale longitudinale (20) ayant une surface de fixation (22) qui est dirigée vers le haut ou vers le bas, laquelle surface de fixation est munie d'au moins une rangée de moyens de fixation, des moyens sélectionnés étant utilisés pour chaque type de superstructure pour fixer la superstructure sur le véhicule de marchandises, les tronçons de fixation et leurs moyens de fixation ayant des positions qui sont sélectionnées de manière spécifique pour que le système et le dispositif de fixation (30) de la superstructure aient des positions correspondantes qui sont sélectionnées de manière spécifique pour le système.

2. Dispositif d'interface pour la fixation de diverses superstructures sur un véhicule de marchandises, le véhicule étant muni d'un cadre de châssis comportant deux poutres principales longitudinales (4, 5) chacune étant munie d'au moins une partie de poutre (12) s'étendant dans une direction verticale ayant des surfaces latérales (21), dans lequel le dispositif comporte un tronçon de fixation longitudinal (17, 18) pouvant être fixé de manière permanente sur chaque poutre principale (4, 5) par l'intermédiaire d'éléments de fixation, les tronçons de fixation ayant une partie de fixation verticale longitudinale (19) par l'intermédiaire de laquelle le tronçon de fixation peut être fixé de manière permanente sur une surface latérale (21) de la poutre principale respective, et des dispositifs de fixation (30) associés à la superstructure (11) sont agencés pour être fixés sur le tronçon de fixation (17, 18) des poutres principales (4, 5), **caractérisé en ce que** le tronçon de fixation (17, 18) a une partie de fixation horizontale longitudinale (20) ayant une surface de fixation (22) qui est dirigée vers le haut ou vers le bas, laquelle surface de fixation est munie d'au moins une rangée de moyens de fixation, des moyens sélectionnés étant utilisés pour chaque type de superstructure pour fixer la superstructure sur le véhicule de marchandises.

3. Dispositif selon la revendication 2, **caractérisé en ce que** les tronçons de fixation (17, 18) sont au moins au nombre de deux et sont écartés d'une distance sélectionnée et **en ce que** les moyens de fixation qui sont des trous (15) sont agencés dans une disposition uniforme prédéterminée.

4. Dispositif selon la revendication 3, **caractérisé en ce que** les tronçons de fixation (17, 18) sont constitués de tronçons à angle droit, de tronçons en T, de tronçons en canal ou de tronçons en Z, ou d'une combinaison de ceux-ci.

5. Dispositif selon la revendication 4, **caractérisé en ce que** la partie de fixation (20) des tronçons (17, 18) est située en ayant sa surface de fixation (22) située dans une position verticalement à distance de la poutre principale associée.

6. Dispositif selon la revendication 2, **caractérisé en ce que** les tronçons de fixation (17, 18) sont fixés sur le bord supérieur des poutres principales (4, 5).

7. Dispositif selon la revendication 2, **caractérisé en ce que** les tronçons de fixation (17, 18) sont fixés sur le bord inférieur des poutres principales (4, 5).

8. Dispositif selon la revendication 2, **caractérisé en ce que** les tronçons de fixation (17, 18) sont fixés sur l'extérieur des poutres principales (4, 5).
